# EUROPEAN PATENT APPLICATION

(11) **EP 1 277 569 A1**
(43) Date of publication of application: **22.01.2003**
(21) Application number: 01921815.5
(22) Date of filing: 11.04.2001
(51) Int. Cl.: B32B 3/16, G02B 5/128

(54) **REFLECTIVE MATERIAL AND METHOD FOR PRODUCING THE SAME**

(30) Priority: 28.04.2000 JP 2000134331
(71) Applicant: KOMATSU SEIREN CO., LTD., Nomi-gun Ishikawa 929-0124 (JP); KOMATSU PROCESS CO., LTD, Nomi-gun, Ishikawa 929-0124 (JP)
(72) Inventor: OIE, Kazuyuki C/O KOMATSU SEIREN CO., LTD., Nomi-gun, Ishikawa 929-0124 (JP); FUJII, Takuya C/O KOMATSU SEIREN CO., LTD., Nomi-gun, Ishikawa 929-0124 (JP); UOZUMI, Konosuke C/O KOMATSU SEIREN CO., LTD., Nomi-gun, Ishikawa 929-0124 (JP); MATSUURA, Hiroaki C/O KOMATSU PROCESS CO., LTD., Nomi-gun, Ishikawa 929-0124 (JP)
(74) Representative: Coleiro, Raymond
(86) International application number: JP0103133
(87) International publication number: WO01083207

(57) **Abstract**

A reflective material obtained by covering at least one side of a sheet-like base material with a resin layer comprising reflective beads and colored beads colored with desired color shade. The reflective material can be given any desired color shade from light tones to dark tones, and exhibits excellent reflectivity and visibility.

## Description

### Technical Field

The present invention relates to a reflective material and to a process for its production. More particularly, the invention relates to a reflective material with excellent reflectivity and visibility when illuminated with light at nighttime or in dark areas, with excellent brightness and clearness, and color depth even with dark tone systems during daytime or in bright areas, and having a richly designed surface layer, as well as to a process for its production.

### Background Art

Reflective materials have conventionally been obtained by the well-known method of using transparent beads, metal vapor-deposited beads obtained by vapor depositing metals on the surface of transparent beads, or hemihedral metal-coated beads obtained by coating the hemispheric surface of transparent beads with a metal (these will all collectively be referred to as "reflective beads"), together with a covering resin for binding or anchoring, in a treatment step such as coating or printing to coat base material surfaces and form reflective materials.

Various techniques designed to improve reflectivity and visibility have also been developed. However, the goal of guaranteeing reflectivity and visibility of dark tone systems during nighttime or in dark areas and the goal of maintaining color density, brightness and clearness, and depth of the reflective materials of dark tone color systems during daytime or in bright areas are conflicting requirements. Continued efforts have been directed toward increasing the distribution density of reflective beads per unit area, changing the type of covering resin or changing the bead size or the method for their surface treatment, in order to improve reflectivity and visibility, but the results of such research have either reduced the reflectivity and visibility of reflective sections at nighttime or in dark areas or failed to improve the color density, brightness and clearness, and depth at daytime or in light areas, particularly for dark tone reflective materials, and it has not been possible to achieve rich designs.

For example, in U.S. Patent No. 5,650,213 there is disclosed a process of coating using a resin which is a covering resin comprising reflective beads with a diameter of 20-200 µm which are colored with a color pigment with a particle size of less than 2 µm, wherein the reflective beads and the color pigment particles are present in a prescribed volume ratio. In this process, since the pigment-containing covering resin covers the surface of the reflective beads, a higher density of pigment in the covering resin, i.e. a darker tone system, lowers the amount of light incident to the reflective beads, resulting in poor reflectivity and visibility at nighttime and in dark areas. Increasing the number of reflective beads in the covering resin has introduced a problem wherein the degree of whiteness for dark tone systems at daytime or in light areas is higher, leading to a lack of color density or brightness and clearness, and depth.

### Disclosure of the Invention

It is an object of the present invention to solve the aforementioned problems of the prior art by providing a richly designed reflective material with excellent reflectivity and visibility at nighttime or in dark areas, with vastly enhanced color density of reflective sections or brightness and clearness, and color depth even with dark tone systems during daytime or in bright areas, as well as to a process for its production.

The invention also solves the aforementioned problems by providing a reflective material obtained by covering at least one side of a sheet-like base material with a resin layer comprising reflective beads and colored beads colored with desired color shade.

The invention further provides a process for production of a reflective material which comprises coating at least one side of a sheet-like base material with a resin solution in which there are dispersed reflective beads and colored beads colored with desired color shade, and fixing it onto the material as a resin layer containing the beads.

### Brief Description of the Drawings

Fig. 1 is a schematic cross-sectional view of a reflective material according to the prior art.
Fig. 2 is a schematic cross-sectional view of an embodiment of a reflective material according to the invention.

### Best Mode for Carrying Out the Invention

The reflective material of the invention is characterized in that the surface of a base material is covered with a layer composed of a covering resin in which there are dispersed reflective beads and colored beads colored with desired color shade. The reflective material may be produced by coating the base material surface with a resin solution in which there are dispersed reflective beads and colored beads colored with desired color shade, and fixing it onto the material as a resin layer containing the beads.

In this process, for example when an absorbing material such as a fiber cloth is used as the base material together with reflective beads with a relatively large diameter and colored beads with a relatively small diameter, most of the colored beads with a small particle size migrate to the base material as the fluid resin solution is cast over the base material surface and simultaneously impregnates the base material, and this is believed to result in the enhanced reflectivity and visibility. The effect is considered particularly notable when a non-absorbing material is used as the base material, but the following phenomenon is thought to simultaneously occur even with absorbing materials. That is, if the diameter of the colored beads is slightly smaller than the diameter of the reflective beads, since the reflective beads and the colored beads are both spherical, most of the colored beads migrate from the reflective beads to the side while the covering resin is solidifying or hardening and becoming fixed to the base material surface after the base material surface has been coated with the covering resin solution, so that the colored beads no longer cover the reflective beads. Presumably as a result of this, virtually none of the colored material remains on the reflective beads, thus allowing sufficient incident light to enter the reflective beads and thereby enhancing the reflectivity and visibility. The reflective beads do not necessarily need to be fully covered with the covering resin, and parts thereof may be exposed through the surface of the covering resin layer, but when the reflective beads are totally covered with the covering resin, the diameter of the reflective beads, the diameter of the colored beads and the thickness of the reflective bead-covering resin from the top of the reflective beads are preferably in the following relationship:
reflective bead diameter > colored bead diameter > thickness of covering resin from top of reflective beads, while the diameters and thickness are also preferably as uniform as possible.

When the diameter of the reflective beads, the diameter of the colored beads and the thickness of the covering resin from the top of the reflective beads satisfy the aforementioned relationship but, for example, the colored bead diameter is much smaller than the reflective bead diameter, the reflective beads are covered with the covering resin containing colored beads so that the amount of light incident to the reflective beads tends to be reduced, resulting in lower reflectivity and visibility at nighttime and in dark areas, which is the same problem described above that occurs with conventional reflective materials in which a colored pigment is contained in the covering resin. It is needless to mention, however, that the covering resin in the reflective material of the invention may also be appropriately colored if desired, so long as the object of the invention is not impeded.

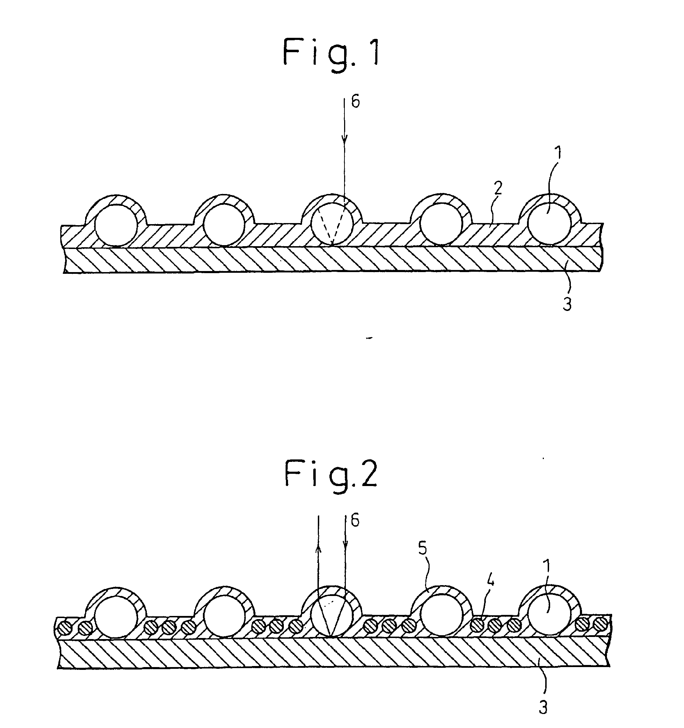

An embodiment of the reflective material of the invention will now be explained in contrast to a reflective material of the prior art, with reference to the attached drawings. Fig. 1 is a schematic cross-sectional view of a reflective material according to the prior art. In this material, the covering resin 2 fixed to the surface of the base material 3 is colored with a pigment, and therefore when the reflective beads 1 are fully covered with the covering resin 2, the incident light 6 is blocked from the reflective beads by the colored resin layer, resulting in very weak light reflection from the reflective beads, especially when the resin is colored with a dark tone. On the other hand, as shown in Fig. 2 which is a schematic cross-sectional view of an embodiment of a reflective material according to the invention, the covering resin in this material is not colored, but reflective beads 1 and colored beads 4 are appropriately dispersed and held in the layer of the covering resin 5 fixed to the surface of the base material 3 so that only the covering resin layer is present on the reflective beads 1, and therefore incident light 6 is not blocked from the reflective beads and light reflection from the reflective beads 1 is not weakened. However, since the colored beads 4 are densely dispersed in the layer of the covering resin 5 in such a manner that the entire covering resin layer is colored by the color shade of the colored beads and thus displays a colored outer appearance, the resin layer may be freely colored with a dark tone. Consequently, the reflective material of the invention has excellent reflectivity and visibility even when colored with a dark tone, allowing coloration with any color from light tones to dark tones without impairing the excellent reflectivity or visibility, so that the material can be given a rich design.

The reflective beads used for the invention may be reflective beads for diffuse reflection, mirror reflection or retroreflection, such as transparent beads made of glass or acrylic resins, metal vapor deposited beads obtained by vapor depositing metal on the surface of transparent beads, or hemihedral metal-coated beads obtained by coating the hemispheric surface of transparent beads with a metal, with no particular restrictions so long as they are reflective, and their material types and properties may be selected in accordance with the type of covering resin and base material used and the properties desired for the product.

The reflective beads may have a diameter of 20-300 µm, for example, and are preferably included in an evenly dispersed amount of 30 wt% or greater with respect to the weight of the covering resin, with an amount of 50 wt% or greater being more preferred. At less than 30 wt%, the reflectivity and visibility of the resulting reflective material may be inadequate.

The colored beads serve as coloring for the reflective material, and they may be beads composed of an acrylic resin, polyurethane-based resin or the like, with no particular restrictions so long as they can provide the desired color, and they may be selected in accordance with the type of covering resin and base material used.

The colored beads preferably have a diameter of 2-100 µm, for example. As mentioned above, the reflective material of the invention may also be colored by using a pigment or the like in addition to the colored beads in order to color the covering resin itself.

The solvent or dispersion medium of the covering resin used for the invention may be an aqueous solvent, organic solvent or a mixed solvent of water and an organic solvent, while the covering resin may be, for example, an acrylic resin, urethane-based resin, vinyl-based resin, epoxy-based resin, silicone-based resin, cellulose-based resin, etc., with no particular restrictions so long as it is suitable for anchoring the reflective beads and colored beads and can be fixed to the surface of the base material. When a dark tone reflective material is desired, the covering resin is preferably transparent or nearly transparent, so as to not block light incident on the reflective beads at nighttime or in dark areas.

The covering resin is usually dissolved or dispersed in the solvent. The solvent used may be water, toluene, xylene, an alcohol such as methyl alcohol, a ketone such as methyl ethyl ketone, and ester such as ethyl acetate, or the like.

The viscosity of the solution or dispersion of the covering resin (as measured with a type-B viscometer, Rotor No.3, 6 rpm, 15°C) is preferably 1000-1,000,000 cps and more preferably 10,000-30,000 cps, since viscosity within this range will allow uniform dispersion and mixture of the reflective beads and colored beads without their precipitation even when their diameter and specific gravity are different, to give a solution with a long shelf life.

As examples of base materials that are useful for the invention, there may be mentioned textile fabrics, paper, resin or metal films, sheets and the like, and these may be made of materials including plastics or synthetic fiber materials of polyester, nylon, urethane, vinyl chloride, etc., natural organic fiber materials such as wool, silk, cotton, etc., as well as metals such as iron and aluminum or their alloys, glass, wood, and the like.

For production of a reflective material according to the invention, the method employed to coat the base material surface with the covering resin solution may be any known method such as screen printing, gravure printing, coating, spraying or the like. Depending on the covering resin used, a known method is then applied for drying and heat treatment to accomplish solidification or hardening, thereby fixing the resin layer on the base material surface. For example, heat treatment is carried out for 0.5-5 minutes at a temperature of 70-200°C with a drier, tenter or the like, or else-the layer is aged for 24 hours at a temperature of below 100°C.

According to the invention, a known method of water-repellent treatment or surface protective coating may be carried out after fixing of the covering resin in order to obtain a reflective material with durability and weather resistance.

The method of coloring the reflective material of the invention with the aforementioned colored beads is highly useful from the standpoint of providing very easy and effective dark tone materials, and the reflective materials obtained thereby have excellent reflectivity and visibility at nighttime and in dark areas even with dark tone systems, while also being suitable for rich designs with vastly improved color density, brightness and clearness, and depth of reflective sections at daytime and in light areas. Dark tone materials are particularly indispensable in fields that require highly intricate designs, and in the prior art it has not been possible to obtain reflective materials with dark red, dark blue or black systems regardless of diffuse reflection, mirror reflection or retroreflection; from this standpoint, the reflective material of the invention can be considered a revolutionary material.

The invention will now be explained in greater detail by way of examples and comparative examples. The "parts" in the examples are parts by weight.

The reflectivity of the reflective materials obtained in the examples was evaluated by simple measurement of reflection according to the reflection performance measurement method of JIS Z9117. That is, a 100 W tungsten light bulb was placed in a dark room at a position 10 m from the object to be measured, and a comparative judgment of the luminance was made visually with an incident light angle of 0.2° and a reflected light measuring angle of 2°.

### Example 1 (Coloring with colored beads)

| Covering resin: | |
|---|---|
| Aqueous emulsion of urethane resin (solid content: 50%) | 40 parts |

| Reflective beads: | |
|---|---|
| Retroreflective glass beads (diameter approximately : 40 µm) | 50 parts |

| Coloring beads: | |
|---|---|
| Black acrylic beads (diameter: approximately 15 µm) | 10 parts |

| Thickening agent: | |
|---|---|
| Non-ionic surfactant | 1 part |

The above components were combined and uniformly dispersed with a mixer, and the viscosity was adjusted to 30,000 cps (measured with a type-B viscometer, Rotor No.3, 6 rpm, 15°C) to obtain a reflective ink, which was then coated onto a textile fabric (polyester: Oxford cloth) by screen printing (using 800 mesh screen silk) and dried, and then fixed by heat treatment for 3 minutes at a temperature of 175°C, to obtain a reflective fabric. The thickness of the resin layer of the obtained fabric was about 40 µm.

### Comparative Example 1 (Coloring with pigment)

| Covering resin: | |
|---|---|
| Aqueous emulsion of urethane resin (solid content: 50%) | 40 parts |

| Reflective beads: | |
|---|---|
| Rereflective glass beads (diameter: approximately 40 µm) | 50 parts |

| Coloring pigment: | |
|---|---|
| Carbon black | 10 parts |

| Thickening agent: | |
|---|---|
| Non-ionic surfactant | 1 part |

The above components were combined and treated by the same method as in Example 1 to obtain a reflective fabric. The thickness of the resin layer of the obtained fabric was about 40 µm.

When the reflectivity of each of the fabrics obtained above was evaluated, the fabric of Example 1 exhibited high density and depth of black color in a light area, while its reflectivity and visibility were adequate in a dark area (the dark room conditions described above), despite the black color.

On the other hand, the fabric of Comparative Example 1 exhibited low density of black color in the light area, producing a grayish color, while having poor reflectivity and visibility in the dark area (the dark room conditions described above) because of the black color, and was therefore unable to adequately perform the function of a reflective material.

### Example 2 (Coloring with colored beads)

| Covering resin: | |
|---|---|
| Aqueous emulsion of urethane resin (solid content: | |
| 50%) | 40 parts |

| Reflective beads: | |
|---|---|
| Hemihedral metal-coated beads (diameter:approximately 40 µm) | 50 parts |

| Coloring beads: | |
|---|---|
| Black acrylic beads (diameter: approximately 15 µm) | 10 parts |

The above components were combined and uniformly dispersed with a mixer, and the viscosity was adjusted to 25,000 cps (measured with a type-B viscometer, Rotor No.3, 6 rpm, 15°C) to obtain a reflective ink, which was then coated onto a textile fabric (polyester: pongee cloth) by screen printing (using 800 mesh screen silk) and dried, and then fixed by heat treatment for 4 minutes at a temperature of 175°C, to obtain a reflective fabric. The thickness of the resin layer of the obtained fabric was about 40 µm.

### Comparative Example 2 (Coloring with pigment)

| Covering resin: | |
|---|---|
| Aqueous emulsion of urethane resin (solid content:50%) | 40 parts |

| Reflective beads: | |
|---|---|
| Hemihedral metal-coated beads (diameter:approximately 40 µm) | 50 parts |

| Coloring pigment: | |
|---|---|
| Carbon black | 10 parts |

The above components were combined and treated by the same method as in Example 1 to obtain a reflective fabric. The thickness of the resin layer of the obtained fabric was about 40 µm.

When the reflectivity of each of the fabrics obtained above was evaluated, the fabric of Example 2 exhibited high density and depth of black color in the light area, while its reflectivity and visibility were adequate in the dark area (the dark room conditions described above), despite the black color.

On the other hand, the fabric of Comparative Example 2 exhibited low density of black color in the light area, producing a grayish color, while having poor reflectivity and visibility in the dark area (the dark room conditions described above) because of the black color, and was therefore unable to adequately perform the function of a reflective material.

### Industrial Applicability

According to the present invention, it is possible to provide reflective materials with excellent reflectivity and visibility that are colored with any desired color shade from light to dark tones, and which can therefore be used for purposes of safety or crime prevention, and to provide materials that can be used for production of richly designed products for a very wide range of applications including clothing, sportswear, bags, shoes, baby carriages, flags, advertisements, signboards and the like, without any color restrictions.

## Claims

1. A reflective material obtained by covering at least one side of a sheet-like base material with a resin layer comprising reflective beads and colored beads colored with desired color shade.

2. A material according to claim 1, wherein the reflective beads have a diameter larger than the diameter of the colored beads.

3. A material according to claim 1 or 2, wherein the reflective beads are selected from transparent beads, metal vapor-deposited beads and hemihedral metal-coated beads.

4. A material according to any one of claims 1 to 3, wherein the reflective beads have a diameter of 20-300 µm.

5. A material according to any one of claims 1 to 4, wherein the colored beads are made of an acrylic resin or a polyurethane-based resin.

6. A material according to any one of claims 1 to 5, wherein the colored beads have a diameter of 2-100 µm.

7. A material according to any one of claims 1 to 6, wherein the resin layer is made of a resin selected from the group consisting of acrylic resins, urethane-based resins, vinyl-based resins, epoxy-based resins, silicone-based resins and cellulose-based resins.

8. A process for production of a reflective material which comprises coating at least one side of a sheet-like base material with a resin solution in which there are dispersed reflective beads and colored beads colored with desired color shade, and fixing it onto the material as a resin layer containing said beads.

9. A process according to claim 8, wherein the reflective beads have a diameter larger than the diameter of the colored beads.

10. A process according to claim 8 or 9, wherein the reflective beads are selected from transparent beads, metal vapor-deposited beads and hemihedral metal-coated beads.

11. A process according to any one of claims 8 to 10, wherein the reflective beads have a diameter of 20-300 µm.

12. A process according to any one of claims 8 to 11, wherein the colored beads are made of an acrylic resin or a polyurethane-based resin.

13. A process according to any one of claims 8 to 12, wherein the colored beads have a diameter of 2-100 µm.

14. A process according to any one of claims 8 to 13, wherein the resin is selected from the group consisting of acrylic resins, urethane-based resins, vinyl-based resins, epoxy-based resins, silicone-based resins and cellulose-based resins.
